# EUROPÄISCHE PATENTSCHRIFT

(11) **EP 3 625 093 B1**
(45) Veröffentlichungstag und Bekanntmachung des Hinweises auf die Patenterteilung: **09.06.2021**
(21) Anmeldenummer: 18719501.1
(22) Anmeldetag: 17.04.2018
(51) Int. Cl.: B60T 7/22, B60T 8/1755, B60W 30/16

(54) **VERFAHREN UND STEUEREINRICHTUNG ZUR AUTONOMEN NOTBREMSUNG EINES EGO-FAHRZEUGS**
METHOD AND CONTROL DEVICE FOR THE AUTONOMOUS EMERGENCY BRAKING OF AN EGO VEHICLE
PROCÉDÉ ET DISPOSITIF DE COMMANDE DESTINÉ AU FREINAGE D'URGENCE AUTONOME D'UN ÉGO-VÉHICULE

(30) Priorität: 19.05.2017 DE 102017111004
(43) Veröffentlichungstag der Anmeldung: 25.03.2020
(73) Patentinhaber: ZF CV Systems Europe BV, 1170 Brussels (BE)
(72) Erfinder: MEYER, Rüdiger, 30449 Hannover (DE)
(74) Vertreter: Rabe, Dirk-Heinrich
(86) Internationale Anmeldenummer: PCT/EP2018/059722
(87) Internationale Veröffentlichungsnummer: WO 2018/210509

(56) Entgegenhaltungen:
- WO-A1-2004/028847
- DE-A1-102010 008 208
- DE-A1-102010 049 351
- DE-A1-102015 104 547

## Beschreibung

Die Erfindung betrifft ein Verfahren zur autonomen Notbremsung eines Eigenfahrzeugs, sowie eine Steuereinrichtung für ein Fahrdynamiksystem zur autonomen Notbremsung eines Eigenfahrzeugs.

Ein derartiges Verfahren und eine derartige Steuereinrichtung sind z. B. aus der EP 2 814 704 B1 bekannt. Autonome Notbremsungen dienen insbesondere dazu, bei der Ermittlung von Fahrzustandsgrößen und weiteren Messgrößen, insbesondere einer Abstandsmessung zu einem vorderen Objekt, eine Notbremssituation zu erkennen und autonom, d. h. selbsttätig, eine Bremsung einzuleiten. Hierzu kann z.B. eine Steuereinrichtung des Fahrdynamiksystems ein externes Bremssignal (XBR) an eine Bremseinrichtungs-Steuereinrichtung ausgeben, damit diese ein Bremssignal an Radbremsen ausgibt. Weiterhin kann ein derartiges Fahrdynamiksystem bereits in die Bremseinrichtung integriert sein. Mit einem derartigen Notbremssystem (autonomous emergency brake system, AEBS) kann somit eine Kollision bzw. ein Auffahrunfall mit einem erfassten vorderen Objekt ganz vermieden werden, oder aber eine Unfallschwere verringert werden.

Bei derartigen Notbremssystemen bzw. Notbrems-Verfahren kann somit das dynamische Verhalten des Eigenfahrzeugs z. B. als Bewegungsgleichung in zweiter Ordnung der Zeit (Ortsfunktion mit Ableitungen zweiten Grades in der Zeit) mit der aktuellen Position, der Eigengeschwindigkeit und der Eigenbeschleunigung herangezogen werden, und dementsprechende Werte für das erfasste Objekt gebildet werden, so dass Bewegungsgleichungen des Eigenfahrzeugs und des Objektes, oder auch Differenzwerte, d.h. ein Differenzabstand und Differenzgeschwindigkeiten, gebildet werden. Hierdurch kann ein dynamisches Kriterium in Längsrichtung (Längsdynamik-Kriterium) gebildet werden. Weiterhin kann auch ein querdynamisches Verhalten berücksichtigt werden, das z.B. als Ausweich-Kriterium ermittelt werden kann und einen möglichen Ausweichvorgang des Fahrers zur Seite berücksichtigt.

Bei derartigen Bremssystemen kann weiterhin eine Warnphase vor Einleitung der autonomen Notbremsung vorgesehen sein, bei der dem Fahrer ein Warnsignal angezeigt wird, dass eine Notbremsung bevorsteht. Somit kann der Fahrer jetzt z. B. selbsttätig bereits eine Bremsung einleiten, oder auch einen Ausweichvorgang einleiten. Weiter kann auch vorgesehen sein, dass der Fahrer die erkannte Notbremssituation unterdrücken kann, wenn er erkennt, dass eine falsche Detektion vorliegt, und das vermeintliche Objekt nicht als reales Objekt zu bewerten ist, sondern der Abstandssensor z. B. eine Brücke oder andere Verengung als kollisionsgefährdendes Objekt erkannt hat

Die WO2004028847A1 offenbart eine Vorrichtung und ein Verfahren zur Auslösung eines selbsttätigen Notbremsvorgangs eines Fahrzeugs zur Vermeidung eines Auffahrens des Fahrzeugs auf ein vorausfahrendes Fahrzeug bzw. zur Verminderung der Auffahrfolgen, wobei eine Fahrerwarnung ausgelöst wird, wenn zumindest eine vorgegebene Warnbedingung erfüllt ist und wobei die Erfüllung der Warnbedingung angibt, dass aufgrund der unter Berücksichtigung der ermittelten Beschleunigung des Fahrzeugs und/oder der ermittelten Relativbeschleunigung zwischen Fahrzeug und vorausfahrendem Fahrzeug gegebenen momentanen Fahrsituation des Fahrzeugs und einer vorgegebenen Notbremsverzögerung bei Ablauf einer vorgegebenen Warnzeitdauer der selbsttätige Notbremsvorgang auszulösen ist, mit dem Ziel, mit Beendigung des selbsttätigen Notbremsvorgangs eine vorgegebene Zielrelativgeschwindigkeit und/oder einen vorgegebenen Zielsicherheitsabstand zwischen Fahrzeug und vorausfahrendem Fahrzeug zu erreichen.

Die DE102015104547A1 offenbart ein Verfahren zur Auslösung eines selbsttätigen Notbremsvorgangs bei einem Fahrzeug zur Vermeidung eines Auffahrens auf ein Hindernis, wobei eine Fahrerwarnung ausgelöst wird, wenn wenigstens eine Warnbedingung erfüllt ist, wobei die Erfüllung der Warnbedingung angibt, dass aufgrund der momentanen Fahrsituation des Fahrzeugs relativ zum Hindernis der selbsttätige Notbremsvorgang auszulösen ist, wobei der selbsttätige Notbremsvorgang erst nach Auslösung der Fahrerwarnung und anschließendem Ablauf einer Warnzeitdauer ausgelöst wird, wobei die Warnzeitdauer (tWarning) abhängig von der Relativbewegungssituation zwischen dem Fahrzeug und dem Hindernis eingestellt und/ oder abhängig von einer sich zeitlich ändernden Relativbewegungssituation zwischen dem Fahrzeug und dem Hindernis angepasst wird.

Die DE102010049351 A1 offenbart ein Verfahren zum Betreiben einer Bremsassistenzvorrichtung für ein Fahrzeug sowie ein Bremsassistenzsystem zur Durchführung des Verfahrens, bei dem bei ausbleibender Fahreraktivität in Abhängigkeit eines Abstands des Fahrzeugs zu einem vor dem Fahrzeug befindlichen Objekt eine Assistenzfunktion in mehreren Eskalationsstufen ausgeführt wird, wobei als Assistenzfunktion ein Warnhinweis erzeugt und/oder automatisch ein Bremsvorgang des Fahrzeugs eingeleitet wird. Erfindungsgemäß wird eine Klassifizierung einer von dem Fahrzeug befahrenen Straße durchgeführt und die Ausführung der Assistenzfunktion wird in Abhängigkeit der Klassifizierung zugelassen oder verhindert.

Die DE102010008208A1 offenbart ein Verfahren zur Verhinderung von Kollisionen oder Verminderung einer Kollsionsstärke eines Fahrzeugs mit den Schritten: Ermitteln einer einen Fahrzustand des Fahrzeugs kennzeichnenden Fahrzeugzustandsgröße, Ermitteln einer das Fahrzeug umgebende Objekte kennzeichnenden Objekte-Zustandsgröße, Ermitteln einer eine Kritikalität des Fahrzeugs kennzeichnenden Fahrzeugskritikalitätsgröße in Abhängigkeit von der Fahrzeugzustandsgröße und der Objekte-Zustandsgröße, Einleiten einer Notbremsung zur Verhinderung der Kollision oder Verminderung der Kollisionsstärke in Abhängigkeit von der Fahrzeugkritikalitätsgröße. Um eine verbesserte Kollisionsvermeidung und/oder Kollisionsstärkenverminderung zu ermöglichen, ist vorgesehen, dass die Objekte-Zustandsgröße ein vor dem Fahrzeug befindliches Kollisionsobjekt und ein hinter dem Fahrzeug befindliches Kolonnenobjekt kennzeichnet.

Weiterhin sind haptische Warnphasen bekannt, bei denen dem Fahrer durch eine leichte Bremsung haptisch, d. h. als Brems-Ruck, die bevorstehende Einleitung einer Notbrems-Phase angekündigt wird.

Nach den Warnphasen wird dann im Allgemeinen die Notbrems-Phase, vorzugsweise mit einem maximalen Bremsdruck, eingeleitet. Hierbei können Mindest-Zeitdauern für die Warnphasen vorgesehen sein, um dem Fahrer hinreichende Zeit zu geben.

Bei derartigen Ermittlungen der Notbremsung als Bewegungsgleichung der Zeit und Heranziehung von Zeitdauern für die Warnphasen vor der Einleitung des Brems-Vorgangs kann jedoch ein recht früher Zeitpunkt ermittelt werden, zu dem die Warnphase eingeleitet wird. Sehr frühe erste Zeitpunkte zur Einleitung der Warnphase können jedoch gegebenenfalls unberechtigt sein, und den Fahrer zu riskantem Verhalten veranlassen, obwohl dies noch nicht zwingend geboten ist.

Weiterhin können Toleranzen der Messeinrichtungen zu erheblichen Schwankungen führen, die insbesondere bei einer aktuellen Berücksichtigung zu hohen Schwankungen bei der Einleitung der Phasen führen können.

Der Erfindung liegt daher die Aufgabe zugrunde, ein Verfahren zur autonomen Notbremsung, sowie eine Steuereinrichtung für eine autonome Notbremsung zu schaffen, die eine hohe Sicherheit gewährleisten und unnötig frühe Initiierungen verringern. Weiterhin soll ein Fahrzeug mit einer derartigen Steuereinrichtung vorgesehen sein.

Diese Aufgabe wird durch das Verfahren nach Anspruch 1, eine Steuereinrichtung nach dem unabhängigen Anspruch und ein Kraftfahrzeug mit einer derartigen Steuereinrichtung gelöst. Die Unteransprüche beschreiben bevorzugte Weiterbildungen.

Somit erfolgt eine Vorab-Ermittlung bzw. Projektion der Verkehrssituation, um vorab die drei Phasen der Notbremsung, Warnphase, Teilbrems-Phase und Notbrems-Phase, festzulegen.

Den Verkehrssituationen wird
- jeweils eine Kritikalität zugeordnet, die im Wesentlichen eine Wahrscheinlichkeit für eine Kollision widergibt; somit wird eine Kritikalitätsfunktion bzw. Kritikalitätskurve in Abhängigkeit des Längsabstandes und/oder der Zeit gebildet,
- es werden Mindestdauern, insbesondere Mindest-Zeitdauern, zur Einleitung der Phasen, insbesondere der Teilbrems-Phase und/oder Notbremsphase festgelegt, die nicht unterschritten werden können.

Die so projizierten Anfangspunkte der Phasen, d.h. insbesondere Anfangszeitpunkte und/oder Anfangs-Längsabstände, werden dann nachfolgend bei Durchführung des Notbremsvorgangs im Wesentlichen eingehalten, auch wenn die aktuellen Messdaten der Fahrdynamik-Größen und/oder des Längsabstandes gegenüber der Projektion geänderte Werte anzeigen. Vorzugsweise ist hierbei vorgesehen, dass der Anfangspunkt der Einleitung der jeweils nächsten Phase, d.h. Teilbrems-Phase oder Notbrems-Phase, nicht vorgezogen werden kann, aber bei Erfüllen der Mindestdauer nach hinten gestellt, d.h. z.B. zeitlich oder räumlich verzögert und somit gegebenenfalls auch ganz weg gelassen werden kann, wenn die K-Schwelle nicht mehr erreicht wird.

Vorzugsweise werden die K-Schwellen für die Kritikalität zur Einleitung der Phasen derartig niedrig gelegt, dass gemäß der Projizierung die Mindestdauern eingehalten sind. Hierbei wird insbesondere auch eine Toleranz, insbesondere durch Messungenauigkeiten, derartig mit berücksichtigt, dass vorzugsweise eine gesamte Toleranzbreite der Kritikalitätsfunktion bzw. K-Kurve die jeweilige K-Schwelle vor Erreichen der Mindestdauer überschreitet.

Somit kann ein großer Toleranzbereich für die Festlegung der nächsten Phase, insbesondere der Notbrems-Phase, aufgrund der Toleranzen verhindert werden. Hierbei wird insbesondere erkannt, dass mit Einsetzen der Teilbremsung in der Teilbrems-Phase eine höhere Toleranz in der Messung des Längsabstandes und der Fahrdynamik-Größen auftreten kann, die zu einem sehr großen Toleranzbereich für den Anfangspunkt zur Einleitung der Notbrems-Phase führen kann. Daher wird die Mindestdauer, d.h. insbesondere eine Mindest-Warnzeit für die Summe der ersten beiden Phasen, d.h. der Warnphase und der Teilbrems-Warnphase, angesetzt, die Vorrang haben soll, und die K-Schwellen gemäß der Projektion entsprechend niedrig angesetzt.

Erfindungsgemäß werden einige Vorteile erreicht. So wird ein zu früher Einsatz und eine zu große Schwankungsbreite der Notbrems-Phase verhindert. Es ist aber dennoch eine aktuelle Korrektur möglich dahingehend, dass die nächste Eskalation (Einleitung der nächsten Phase) nach hinten verschoben und somit gegebenenfalls auch verhindert werden kann.

Der Mehraufwand für die Realisierung der Erfindung ist hierbei gering. Es können insbesondere die bestehende Hardware, und auch die wesentlichen Algorithmen, weiter eingesetzt werden.

Die Erfindung wird im Folgenden anhand der beiliegenden Zeichnungen an einigen Ausführungsformen näher erläutert. Es zeigen:
- Fig. 1: eine Darstellung einer Straßenszene eines Fahrzeugs gemäß einer Ausführungsform der Erfindung;
- Fig. 2 bis 4: jeweils Diagramme, die im oberen Teil die Phasen eines Notbremsvorgangs als Eskalations-Stufen und im unteren Teil einen dynamischen Kritikalitäts-Wert darstellen, jeweils in Abhängigkeit des Längsabstandes zwischen dem Eigenfahrzeug und dem Objekt; hierbei zeigen

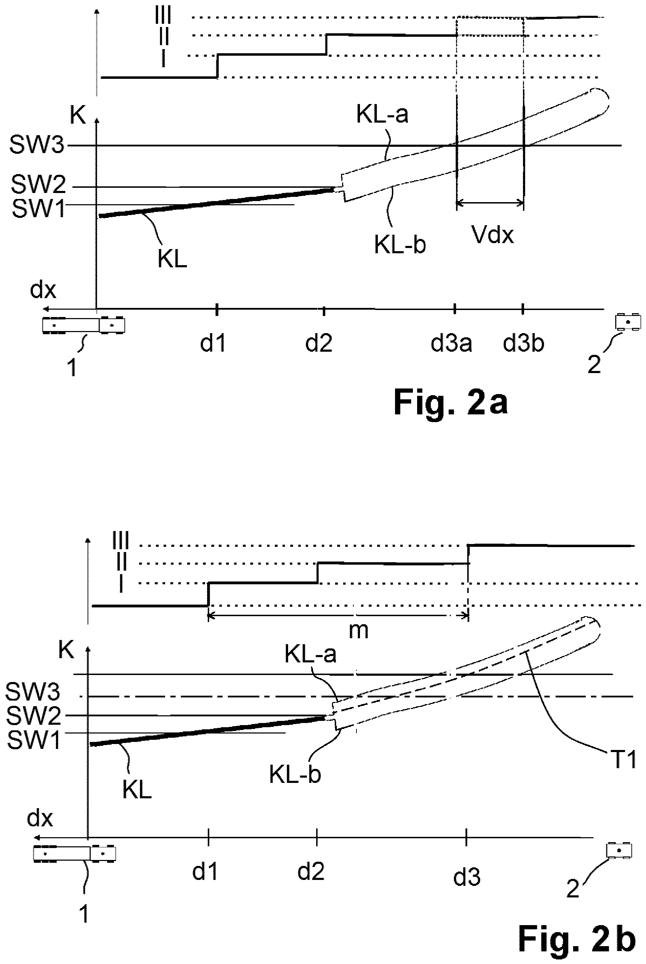

- Fig. 2: eine Darstellung einer Projizierung der Verkehrssituation mit Ermittlung der Einleitung der Phasen der Notbremsung
- in Fig. 2a auf Basis lediglich dynamischer Kriterien,
- in Fig. 2b gemäß einer Ausführungsform der Erfindung mit Mindest-Warndauer_Kriterium K1 und hierzu abgesenkten dynamischen Kriterien K2;

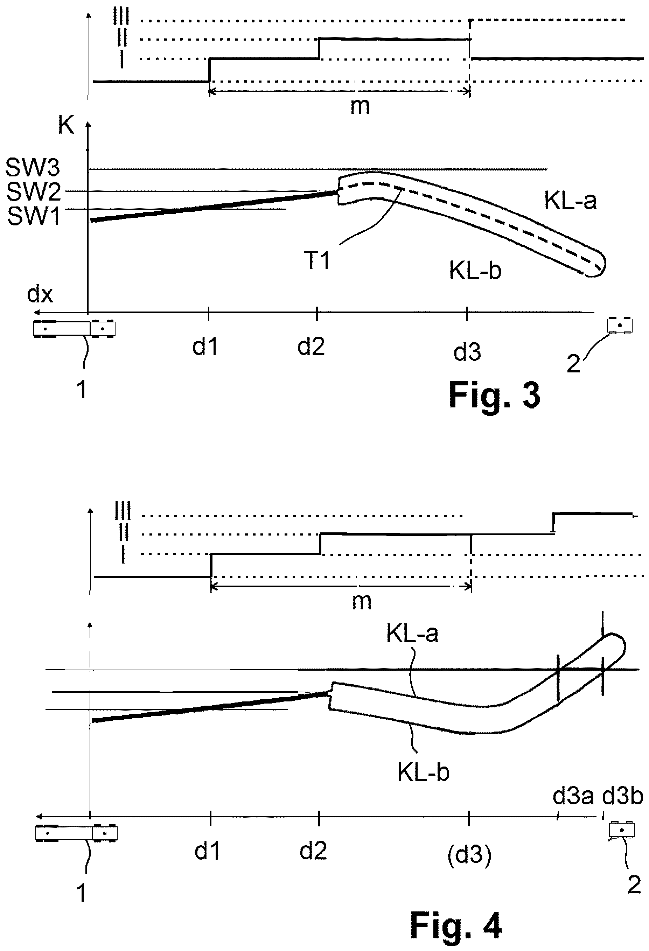

- Fig. 3: eine Darstellung entsprechend Fig. 2b, bei der aufgrund eines geänderten Verhaltens des Objektes die Notbrems-Phase vermieden werden kann;
- Fig. 4: eine Darstellung entsprechend Fig. 2b und 3, bei der nach zunächst reduzierter Kritikalität durch das Verhalten des Objektes nachfolgend wiederum eine Notbrems-Phase einzuleiten ist,

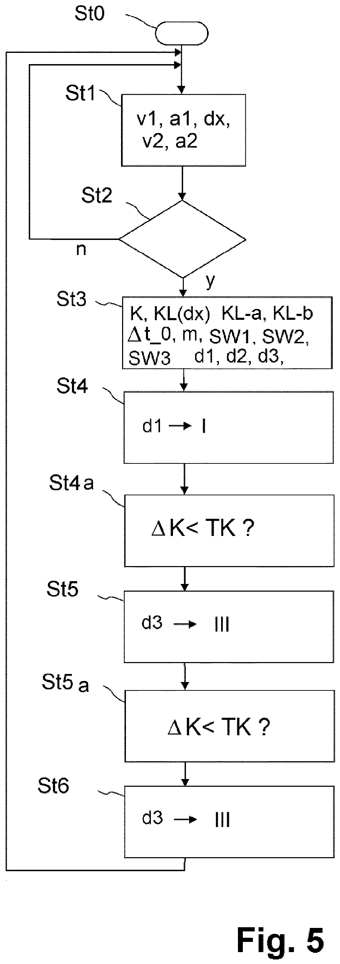

- Fig. 5: ein Flussdiagramm eines erfindungsgemäßen Verfahrens.

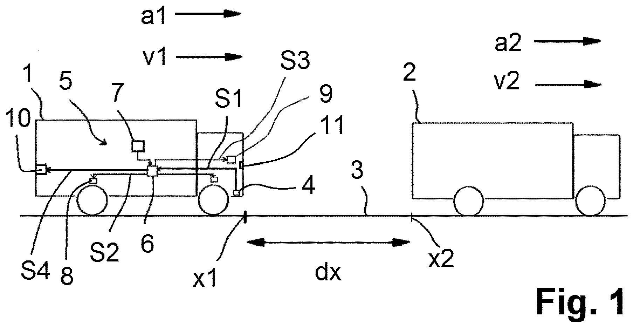

Ein Eigenfahrzeug (Ego-Fahrzeug) 1 fährt auf einer Fahrbahn 3 und mit einer Eigen-Fahrgeschwindigkeit v1 (ersten Fahrgeschwindigkeit) und einer Eigen- Längsbeschleunigung a1 (ersten Längs-Beschleunigung). Hierbei werden gemäß Figur 1 zunächst nur Bewegungen in der Längsrichtung bzw. x-Richtung betrachtet. Vor dem Eigenfahrzeug 1 befindet sich in einem Längsabstand dx ein Objekt 2, das z. B. wiederum ein Fahrzeug sein kann, und fährt mit einer zweiten Geschwindigkeit v2 und einer zweiten Längs- Beschleunigung a2.

Das Eigenfahrzeug 1 weist einen Abstandsensor 4, z. B. auf Radar-Basis, Ultraschall-Basis oder Kamerasystem zur Erfassung des Längsabstandes dx auf, der ein Relativabstands-Messsignal S1 an eine Steuereinrichtung 6 eines Fahrdynamiksystems 5 ausgibt. Das Eigenfahrzeug 1 bzw. dessen Fahrdynamik-System 5 weist weiterhin einen Geschwindigkeitssensor 7 zur Erfassung der Eigen-Fahrgeschwindigkeit v1 auf, z.B. aus den ABS-Raddrehzahlsensoren oder auch der Drehzahl einer Abtriebswelle. Die Steuereinrichtung 6 gibt Bremssignale S2 an Radbremsen 8 zur Durchführung einer Bremsung aus, die somit eine negative Beschleunigung, d. h. eine erste Längsbeschleunigung a1 mit negativen Wert erzeugt. Weiterhin gibt die Steuereinrichtung 6 Warnsignale S3 an eine Warnanzeige 9 für den Fahrer, z. B. im Cockpitbereich des Eigenfahrzeugs 1 aus. Die Warnanzeige 9 kann akustisch und/oder optisch ausgebildet sein.

Die Steuereinrichtung 6 kann vorzugsweise für das Eigenfahrzeug 1 und das Objekt 2 jeweils den Längsabstand dx als Funktion in zweiter Ordnung der Zeit ermitteln.

Das Eigenfahrzeug 1 kann zum einen vom Fahrer durch Fahrer-Bremsungen abgebremst werden, und weiterhin durch autonome Bremsungen. Hierzu ist in der Steuereinrichtung 6 ein autonomes Notbremssystem (AEBS, autonomous emergency braking system) zur Einleitung autonomer Notbremsungen ausgebildet bzw. integriert. Die autonomen Notbremsungen können insbesondere zur Vermeidung einer Kollision mit dem vorderen Objekt 2, und/oder auch zur Verringerung der Unfallschwere eines Unfalls mit dem vorderen Objekt 2 ausgebildet sein.

Bei Ausbildung eines externen Fahrdynamiksystems 5 werden zur Einleitung einer autonomen Bremsung XBR -Befehle (external brake requests) ausgebildet und verarbeitet, was insbesondere durch eine erste Steuereinrichtung für das Fahrdynamiksystem 5 und eine weitere Steuereinrichtung für das Bremssystem des Eigenfahrzeugs 1 vorgesehen sein kann; zur vereinfachten Darstellung ist in Figur 1 eine gemeinsame Steuereinrichtung 6 des Fahrdynamik-Systems 5 vorgesehen; es können jedoch auch getrennte Steuereinrichtungen ausgebildet sein und miteinander kommunizieren.

Zur Einleitung einer Notbremsung sind folgende Phasen vorgesehen, die in Fig. 2a dargestellt sind, wobei als Abszisse der Längsabstand dx aufgetragen ist, der somit bei Annähern des Eigenfahrzeugs 1 an das Objekt 2 nach rechts abnimmt. In dem unteren Diagramm von Fig. 2a ist als Ordinate eine Kritikalität K aufgetragen, die z.B. als skalarer Wert zwischen 0 und 1 die Wahrscheinlichkeit einer Kollision ausdrückt. Die Kritikalität K stellt somit eine K-Funktion oder K-Kurve in Abhängigkeit des Längsabstandes dar. Hierbei kann die Annäherung an das Objekt 2 auch als zeitliche Annäherung umgerechnet werden, so dass die Kritikalität K als Funktion der Zeit t angesetzt werdn kann.

In dem oberen Diagramm von Fig. 2a sind die verschiedenen Phasen des Notbremsvorganges als stufenweise Eskalation aufgetragen:
- In einer ersten Warnphase I (FCW, forward collision warning) wird dem Fahrer mittels der Warnanzeige 9 eine Warnung angezeigt, z. B. als akustischer Ton oder optisches Signal, ohne autonomen Bremseingriff,
- in einer nachfolgenden haptischen Warnphase oder Teilbrems-Warnphase II (HCW, haptic collision warning) erfolgt eine autonome Teil-Bremsung, d. h. mit einem Bremsdruck-Wert p_hc der zu einer Teilbeschleunigung a_hc führt, z. B. mit dem Beschleunigungswert a_hc =-3,5 m/s². Hierdurch wird eine haptische Kollisionswarnung an den Fahrer ausgegeben, der den Bremsruck merkt und hierdurch auf die bevorstehende volle Bremsung bzw. Notbremsung hingewiesen wird.
- In der nachfolgenden Notbrems-Phase III (AEB, autonomous emergency braking) erfolgt dann eine Not-Bremsung, insbesondere mit dem Bremsdruck p_aeb, der insbesondere ein maximaler Bremsdruck sein kann. Die erreichte Notbrems-Beschleunigung a_aeb ist somit vorzugsweise eine Beschleunigung der maximalen Bremsung, z. B. mit a_aeb = -6 m/s².

Vorteilhafterweise wird bereits während der ersten Warnphase I (und auch nachfolgend in den Phasen II, III) ein Bremslicht-Signal S4 an Bremslichter 10 des Eigenfahrzeugs 1 ausgegeben, so dass der hintere Verkehr auf die bevorstehende Bremsung hingewiesen wird. Bei der Berechnung der Phasen I, II, III wird in der Steuereinrichtung 6 berücksichtigt:

Die Ermittlung der Phasen I, II, III erfolgt vorab, d.h. als Projizierung auf Grundlage der ermittelten Fahrdynamik-Daten v1, a1 und Längsabstände dx und deren zeitlichen Verhaltens.

Es wird somit
- eine Projizierung bzw. zeitliche Extrapolation der Verkehrssituation, insbesondere des Längsabstandes dx ermittelt,
- den Verkehrssituationen jeweils eine Kritikalität K zugeordnet, die im Wesentlichen eine Wahrscheinlichkeit für eine Kollision widergibt,
- K-Schwellen für die Kritikalität K zur Einleitung der Phasen festgelegt,
und hieraus dann Anfangspunkte, insbesondere Anfangszeitpunkte und/oder Anfangs-Längsabstände zur Einleitung der Phasen I, II, III ermittelt.

Die projizierten Anfangspunkte werden dann nachfolgend bei Durchführung des Notbremsvorgangs aktualisert.

Gemäß Figur 2a ist auf der Abszisse (x-Achse) der Längsabstand dx zwischen dem Eigenfahrzeug 1 und dem Objekt 2 angegeben, wobei sich das Eigenfahrzeug 1 von links nähert und somit nach rechts hin der Längsabstand dx kleiner wird. In dem unteren Teil bzw. unteren Diagramm der Figur 2 nimmt somit die Kritikalität K nach rechts zu, da das Eigenfahrzeug 1 sich dem Objekt 2 nähert und eine Kollision wahrscheinlicher wird. Die Kritikalität (K-Wert) berücksichtigt hierbei das längsdynamische Verhalten, d.h. die Bewegungsgleichungen zweiten Grades in der Zeit, die in die Zukunft projiziert werden, weiterhin jedoch auch zum Beispiel ein querdynamisches Verhalten als z.B. Ausweich-Kriterium, d.h. die Möglichkeit einer Kollisionsverhinderung durch Steuerungs-Eingriff bzw. Querbeschleunigung.

Die Einleitung der drei Phasen I, II, III erfolgt bei Erreichen folgender K-Schwellen der Kritikalität K:
SW1 als erste K-Schwelle zur Einleitung der Warnphase I,
SW2 als zweite K- Schwelle zur Einleitung der Teilbrems-Phase II, und
SW3 als dritte K-Schwelle zur Einleitung der Notbrems-Phase III.

Die Einleitung dieser Phasen I, II, III gemäß dem oberen Teil-Diagramm stellt somit eine stufenweise Eskalation dar.

Zunächst fährt somit das Eigenfahrzeug 1 in Längsrichtung x, das heißt unter Verkleinerung von dx, auf das Objekt 2 zu, das sich entsprechend ebenfalls in Längsrichtung bewegen oder auch stehen kann. Entsprechend steigt gemäß der eingezeichneten Kritikalitäts-Kurve KL mit sich verringerndem Längsabstand dx der aktuelle K-Wert und erreicht zunächst beim Längsabstand d1 die erste K-Schwelle SW1, sodass die Warn-Phase I eingeleitet wird. Somit wird zum Beispiel wiederum über ein Bremslicht-Signal S4 das Bremslicht des Eigenfahrzeugs 1 eingeschaltet, um auch den hinteren Verkehr zu warnen, weiterhin wird insbesondere über das Warnsignal S3 die Warnanzeige 9 eingeschaltet und hierdurch der Fahrer bereits gewarnt, ohne einen Bremseingriff.

Falls der Fahrer selbst nicht sein bisheriges Fahrverhalten relevant ändert, insbesondere seine aktuelle Längsbeschleunigung (als aktive Beschleunigung oder auch aktuelles Bremsverhalten) nicht ändert, steigt mit sich verringerndem Längsabstand dx entsprechend der K-Kurve KL der K-Wert, bis bei einem Längsabstand d2 die zweite K-Schwelle SW2 erreicht wird, sodass über ein Bremssignal S2 die Radbremsen 8 mit dem geringeren Bremsdruck-Wert p_hc angebremst werden, wodurch ein haptischer Bremsruck erzeugt wird, um den Fahrer zu warnen.

Durch diesen Bremsruck bzw. die Teilbremsung wird jedoch auch die Messgenauigkeit der Messsysteme des Eigenfahrzeugs 1, insbesondere zur Ermittlung des Längsabstandes dx sowie der eigenen Fahrdynamik-Werte, das heißt der Eigengeschwindigkeit v1 und der Eigenbeschleunigung a1, erhöht. Weiterhin ist bei Eingabe des Teil-Bremsdrucks p_hc die tatsächliche Bremswirkung, das heißt die erzeugte Längsbeschleunigung a_hc mit einer gewissen Unsicherheit bzw. Varianz behaftet, die z.B. von der Fahrbahn 3 bzw. deren Reibwert oder Beschaffenheit abhängt, sodass auch eine Unsicherheit bzw. Schwankungsbreite in den jeweiligen dx-Wert auftritt. Der genaue Verlauf der K-Kurve KL ist somit bei Einleitung der Teil-Bremsung in der Teilbrems-Phase II mit einer höheren Ungenauigkeit oder Varianz versehen, was in Figur 2 durch ein breiteres Band, mit einer oberen Linie KL-a und einer unteren Linie KL-b, dargestellt ist.

Im weiteren Verlauf nach Einleitung der Teilbrems-Phase II steigt die K-Kurve KL entsprechend, sodass zunächst die obere Linie KL-a bei d3a und nachfolgend die untere Linie KL-b bei d3b die dritte K-Schwelle SW3 schneidet.

Somit ergibt sich eine hohe Anfangs-Varianz Vdx = d3b-d3a bezüglich des Längsabstandes dx, zur Einleitung der Notbrems-Phase III, die im oberen Diagramm als gestricheltes Kästchen verdeutlicht ist.

Gemäß der vorteilhaften Ausführungsform der Fig. 2b werden gegenüber Fig. 2a Änderungen in der Berechnung der Anfangspunkte d1, d2, d3 vorgenommen:
Bei der Berechnung werden folgende Kriterien herangezogen:
- ein Zeitdauer-Kriterium K1,
   wonach die Warnphase I und die Teilbrems-Phase II Mindestdauern , insbesondere zeitliche Mindestdauern erfüllen müssen, d. h. ihre Zeitdauern erfüllen z. B. die Bedingungen:
   Δt_I≥Δt0_I, (Bedingung K1-I)
   Δt_II≥Δt0_II, (Bedingung K1-II)
- ein dynamisches Kriterium K2
   das insbesondere ein Längsdynamik-Kriterium K2-L umfassen kann, bei dem die bisherige Längsdynamik und die durch die autonomen Eingriffe erzielten Beschleunigungen berücksichtigt und Ortsfunktionen zweiten Grades der Zeit erstellt werden, Hierbei kann z. B. auch die Bedingung angesetzt werden, dass dx(t4)>0 ist, d. h. der Längsabstand dx zu einem Endzeitpunkt t4>0 ist und somit keine Kollision stattgefunden hat.

In dem dynamischen Kriterium K2 wird die Notbrems- Längsbeschleunigung a_aeb in der Notbrems-Phase III und vorzugsweise in der Teilbrems-Warnphase II berücksichtigt

Somit wird eine Mindest-Zeitdauer Δt_0 für die Gesamt-Zeitdauer der beiden Warnphasen, das heißt der Warnphase I und der Teilbrems-Phase (haptischen Warnphase) II eingeführt. Die Einführung dieser Mindest-Zeitdauer Δt_0 führt - übertragen in das Orts-Diagramm der Figur 2 - entsprechend zu dem Längsabstand-Minimalwert m im Längsabstand dx zwischen d1 und d3, der hier entsprechend eingezeichnet ist.

Weiterhin wird die dritte K-Schwelle SW3 derartig abgesenkt, dass die gesamte K-Kurve, d.h. auch beiden Linien KL-a und KL-b, die dritte K-Schwelle SW3 vor Ablauf des Längsabstand-Minimalwertes m erreichen bzw. schneiden.

Somit wird auch in Fig. 2b bei dem gegenüber Fig. 2a unveränderten Verhalten des Eigenfahrzeugs 1 und des Objektes 2, das heißt einer fortlaufenden Annäherung und der Steigerung der Kritikalität (K-Wert) K, somit wiederum bei Einleitung der Teilbrems-Phase II beim Längsabstand d2 die K-Kurve KL (Kritikalitäts-Kurve) aufgeweitet zu einem breiten Band oder breiten Bereich mit der oberen Linie KL-a und der unteren Linie KL-b.

Durch Einführung der Mindest-Zeitdauer Δt_0 (bzw. in dem Ortsbild des Längsabstand-Minimalwertes m) wird ein zu früher Einsatz der Notbrems-Phase III verhindert; vorteilhafterweise startet die Notbrems-Phase III somit mit einer Mindest-Zeitdauer Δt_0 nach Einleitung der Warnphase I, was auch in dem Ortsdiagramm der Figur 2 entsprechend zu einem im Wesentlichen konstanten räumlichen Längsabstand-Minimalwert m einer geringen Toleranz in X-Richtung führt.

Somit wird in Fig. 2b ein eindeutiger Eingriff bzw. Einsatz der Notbrems-Phase III festgelegt, indem zumindest die dritte K-Schwelle SW3 oder auch nur die dritte K-Schwelle SW3 entsprechend derartig abgesenkt wird, dass die gesamte K-Kurve KL, das heißt beide Linien KL-a und KL-b, so tief liegt, dass ihre Schnittpunkte sicher unterhalb der abgesenkten dritten K-Schwelle SW3, d.h. noch vor dem Längsabstand d3 liegen. Es können aber auch alle drei Schwellen SW1, SW2, SW3 gleichmäßig abgesenkt werden.

Fig. 3 und 4 zeigen andere dynamische bzw. zeitliche Verläufe der Situation, die insbesondere in Abhängigkeit des Verhaltens des Objektes 2, aber auch z.B. aufgrund geänderter Reibwerte usw. auftreten können, jeweils bei der Ausführungsform der Fig. 2b mit der abgesenkten Kritikalität K und der Mindest- Zeitdauer Δt_0 bzw. Längsabstand-Minimalwert m.

Gemäß Figur 3 verringert sich während der Teilbremsphase II gegenüber Figur 2b die Kritikalität K, insbesondere aufgrund eines veränderten Verhalten des Objektes 2, das zum Beispiel beschleunigt oder seitlich ausweicht. Somit knickt die Kurve KL in diesem Diagramm nach unten ab. Gemäß der in Figur 2b beschriebenen Ausführungsform mit abgesenkter K-Schwelle SW3 wird hier entsprechend die Notbrems-Phase III nicht eingeleitet, da beide Linien KL-a und KL-b noch unter der abgesenkten dritten K-Schwelle SW3 liegen.

Somit wird zwar vorab aufgrund des bisherigen Verhalten bzw. der Fahrdynamik mit den anfangs erfassten Fahrdynamik-Werten v1, a1, v2, a2 zunächst eine Notbrems-Phase III projiziert bzw. prognostiziert, dann aber aufgrund des gegenüber der Projektion (Annahme) geänderten Verhaltes, d.h. aufgrund aktueller Fahrdynamik-Werte v1, a1 und des aktuell gemessenen Längsabstandes dx die Kritikalitäts-Kurve KL neu berechnet und somit der nächste Anfangspunkt d3 geändert, hier somit nach hinten verlegt wird. Hierbei wird gemäß Fig. 3 die Notbrems-Phase III nicht erreicht, da die K-Kurve KL die abgesenkte dritte Schwelle SW3 nicht erreicht.
Hierbei erfolgt jeweils eine aktuelle Ermittlung der Kritikalität aufgrund aktuelle Messwerte, so dass in Fig. 3 entsprechend die gestrichelte Trajektorie T1 den tatsächlichen Verlauf des Eigenfahrzeugs 1 wiedergibt, wobei die aktuellen Toleranzen gegenüber den vorab projizierten Toleranzen entsprechend geringer sind.

Somit wird keine unnötige Notbrems-Phase III eingeleitet. Vielmehr kann bei weiterem Absinken der K-Kurve KL nachfolgend auch die haptische Warnphase bzw. Teilbrems-Phase II und auch die Warnphase I beendet werden, sodass wiederum eine normale Fahrt erfolgt, wobei auch wiederum das Bremslicht-Signal S4 ausgeschaltet wird.

Figur 4 zeigt einen Verlauf, bei sich zwar zunächst das Verhalten des Objektes derartig ändert, dass die aktuell ermittelte K-Kurve KL absinkt und somit die dritte K-Schwelle SW3 nicht erreicht wird, jedoch die Situation noch nicht endgültig bereinigt ist; so wird hier beispielhaft gezeigt, dass nachfolgend die Kritikalität wieder ansteigt, da zum Beispiel das Objekt 2 wieder abbremst oder wieder zurück auf den Fahrschlauch des Eigenfahrzeugs 1 gelenkt wird.

Eine derartige Erhöhung der K-Kurve KL kann auch durch Erfassen zum Beispiel eines weiteren Objektes, zum Beispiel bei einem Massen-Unfall, erfolgen. Die K-Kurve KL steigt somit wieder an, sodass sie nachfolgend die dritte K-Schwelle SW3 in den Punkten d3a, d3b schneidet, sodass entsprechend die Notbrems-Phase III eingeleitet wird. Auch hierbei erfolgt jeweils eine aktuelle Ermittlung der Kritikalität aufgrund aktuelle Messwerte, so dass in Fig. 4 entsprechend die gestrichelte Trajektorie T1 den tatsächlichen Verlauf des Eigenfahrzeugs 1 wiedergibt, wobei die aktuellen Toleranzen gegenüber den vorab projizierten Toleranzen entsprechend geringer sind.
Somit kann insbesondere gemäß der Ausführungsform der Figur 2b auch bei den geänderten Verläufen nach Fig. 3 und 4 ein definierter Einsatz der Notbrems-Phase III erreicht werden, wobei dynamische Änderungen der Verkehrssituation als geänderter K-Wert jeweils erfasst und berücksichtigt werden.

Somit ergibt sich für das Verfahren z.B. das Flussdiagramm der Fig. 5. Ein Start des Verfahrens erfolgt in Schritt St0, bereits bei Start des Motors oder Beginn der Fahrt mit v1>0. Nachfolgend werden gemäß Schritt St1 fortlaufend Daten aufgenommen, und zwar insbesondere Fahrdynamik-Werte v1, a1 des Eigenfahrzeugs, weiterhin Abstand-Messsignale S1 des Abstandsensors 4. Aus dem Abstands-Messsignal S1 wird in der Steuereinrichtung 6 weiterhin gemäß Schritt St1 eine Objekt-Erkennung und Objekt-Klassifizierung durchgeführt, bei der somit ein Objekt 2, z. B. ein vorausfahrendes Fahrzeug, als solches erkannt wird. Hierbei können aus dem zeitlichen Verhalten der Abstands-Messsignale S1 entsprechend auch das Fahrverhalten des Objektes 2, d. h. insbesondere v2 und a2, ermittelt werden.

In Schritt St2 wird auf Grundlage der in Schritt St1 ermitteln Fahrdynamik-Signale dann ermittelt, ob ein Notbrems-Verfahren einzuleiten ist. Falls dies der Fall ist, wird gemäß Verzweigung y nachfolgend Schritt St3 durchgeführt, sonst wird das Verfahren zurückgesetzt.

In Schritt St3 wird die oben beschriebene Projektion mit Ermittlung der Kritikalität als Funktion bzw. Kurve KL in Abhängigkeit vom Längsabstand, weiterhin wird die Mindestdauer als Δt_0 oder m angesetzt und werden die Anfangspunkte d1, d2, d3 ermittelt.

In Schritt St 4 erfolgt die erste Eskalation, d.h. zum ersten Anfangspunkt d1 die Einleitung der Warnphase I, in Schritt St5 die zweite Eskalation, d.h. zum zweiten Anfangspunkt d2 die Einleitung der Teilbrems-Phase II, und in Schritt St6 die letzte Eskalation, d.h. die Einleitung der Notbrems-Phase III. Hierbei wird jedoch in den Schritten St4a, St5a jeweils eine Aktualisierung berechnet, ob d2 und d3 noch aktuell sind, und somit immer aktuelle Messwerte verwendet, um zu überprüfen, ob die nächste Eskalation einzuleiten ist.

### Bezugszeichenliste (Teil der Beschreibung)

- 1: Eigenfahrzeug
- 2: Objekt
- 3: Fahrbahn
- 4: Abstandssensor
- 5: Fahrdynamiksystem
- 6: Steuereinrichtung des Fahrdynamiksystems 5
- 7: Geschwindigkeitssensor
- 8: Radbremsen
- 9: Warnanzeige, Anzeigeeinrichtung
- 10: Bremslicht
- 11: Schalter, Bedieneinrichtung

- x1: erste Position, Eigenposition
- x2: zweite Position, Position des Objektes 2
- a1: Eigenbeschleunigung, erste Längs-Beschleunigung
- v1: Eigengeschwindigkeit, erste Geschwindigkeit
- a2: zweite Längs-Beschleunigung
- v2: zweite Geschwindigkeit, Geschwindigkeit des Objektes 2

- S1: Abstands-Messsignal
- S2: Bremssignal
- S3: Warnsignal
- S4: Bremslicht-Signal
(diese Bezugszeichen für beide Anmeldungen gemeinsam) (ab hier für die 608-411 A)
- SW1: erste K-Schwelle zur Einleitung der Warnphase I
- SW2: zweite K-Schwelle zur Einleitung der Teilbrems-Phase II
- SW3: dritte K-Schwelle zur Einleitung der Notbrems-Phase III

- I: Warnphase
- II: Teilbrems-Phase, haptische Warnphase
- III: Notbrems-Phase, AEB-Phase

- K: Kritikalität
- KL: Kritikalitäts-Kurve, K-Kurve, Kritikalität als Funktion des Längsabstandes
- KL-a: obere Linie von KL
- KL-b: untere Linie von KL
- Δt_0: Minimal-Zeitdauer

- dx: Relativabstand, Längsabstand zwischen Eigenfahrzeug 1 und Objekt 2
- d1: erster Abstandswert, zur Einleitung der Warnphase I
- d2: zweiter Abstandswert, zur Einleitung der Teilbrems-Phase II
- d3: dritter Abstandswert, zur Einleitung der Notbrems-Phase III
- d3a, d3b: dritte Abstandswerte als Schnittpunkte der Linien KL-a und KL-b mit SW3, die den Bereich oder Varianzbereich der Einleitung der Notbrems-Phase III darstellen,

- Δt_0: Minimal-Zeitdauer
- m: Längsabstand-Minmalwert (Abstands-Wert, der der Minimal-Zeitdauer Δt_0 entspricht)

- p_hc: Teilbrems-Bremsdruck, niedriger Bremsdruck
- a_hc: Teilbeschleunigung in der Teilbrems-Phase II
- b_aeb: Notbrems-Bremsdruck, höherer Bremsdruck
- a_aeb: hohe Bremsbeschleunigung in Notbrems-Phase III

## Patentansprüche

1. Verfahren zur autonomen Notbremsung eines Eigenfahrzeugs (1), mit mindestens folgenden Schritten:
Aufnehmen von Fahrdynamik-Größen (v1, a1) des Eigenfahrzeugs (1),
Aufnehmen von Abstands-Messsignalen (S1) und Ermitteln eines Längsabstandes (dx) des eigenen Fahrzeugs (1) von einem vorderen Objekt (2) (St1),
wenn auf Grundlage der Fahrdynamik-Größen (v1, a1) und der Abstands-Messsignale (S1) eine Notbrems-Situation erkannt wird, (St2, y) vorab Ermitteln oder Projizieren
- eines ersten Anfangspunktes (d1) zur Einleitung einer Warnphase (I) unter Ausgabe eines Warnsignals (S3) ohne Einleitung einer Bremsung, und
- eines zweiten Anfangspunktes (d2) zur Einleitung einer nachfolgenden Teilbrems-Phase (II) mit einem niedrigeren Teilbrems-Bremsdruck (p_hc) und
- eines dritten Anfangspunktes (d3) zur Einleitung einer nachfolgenden Notbrems-Phase (III.) mit einem höheren Bremsdruck (p_aeb),
wobei bei der Ermittlung des ersten, zweiten und/oder dritten Anfangspunktes (d1, d2, d3) folgende Ermittlungsschritte durchgeführt werden:
= es wird ein Mindestdauer-Kriterium (K1) mit mindestens einer Mindestdauer (Δt_0, m) der Warnphase (I) und/oder der Summe aus Warnphase (I) und Teilbrems-Phase (II.) angesetzt, die nicht unterschritten wird,
= es wird vorab eine Kritikalitäts-Funktion (KL); die die Kritikalität der Verkehrssituation darstellt, in Abhängigkeit des Längsabstandes (dx) zu dem Objekt (2) projiziert,
= wobei für die projizierte Kritikalitäts- Funktion (KL) K-Schwellen (SW1, SW2, SW3) zum Einleiten der Warnphase (I), der Teilbrems-Phase (II) und der Notbrems-Phase (III) derartig festgesetzt werden, dass bei Erreichen der Mindestdauer (Δt_0, m) die Kritikalitäts- Funktion (KL) eine dritte K-Schwelle (SW3) zur Einleitung der Notbrems-Phase (III) bereits überschritten hat.

2. Verfahren nach Anspruch 1, wobei die Kritikalität (K) die Wahrscheinlichkeit einer Kollision mit dem Objekt (2) aufweist, unter Berücksichtigung der Längsdynamik als Bewegungsgleichung der Zeit.

3. Verfahren nach Anspruch 2, wobei bei der Ermittlung ein dynamisches Kriterium (K2) mit einem Längsdynamik-Kriterium (K2-I), vorzugsweise auch ein Querdynamik-Kriterium (K2-q), z.B. als Ausweich-Kriterium, verwendet wird zur Ermittlung einer Wahrscheinlichkeit eines Ausweichvorgangs.

4. Verfahren nach einem der vorherigen Ansprüche, wobei bei der Projektion ab der Teilbrems-Phase (II) zur Berücksichtigung höherer Toleranzen ein breiterer Wertebereich (KL-a, KL-b) der Kritikalitäts-Kurve (KL) mit einer unteren Linie (KL-b) und einer oberen Linie (KL-a) angesetzt wird,
wobei in dem projizierten Verlauf die obere Linie (KL-a) und die untere Linie (KL-b) bei Erreichen der Mindestdauer (Δt_0, m) die dritte K-Schwelle (SW3) überschritten haben.

5. Verfahren nach einem der vorherigen Ansprüche, wobei folgende K-Schwellen (SW1, SW2, SW3) angesetzt werden:
- eine erste K-Schwelle (SW1) zur Einleitung der Warnphase (I)
- eine zweite K-Schwelle (SW2) zur Einleitung der Teilbrems-Phase (II)
- die dritte K-Schwelle (SW3) zur Einleitung der Notbrems-Phase (III)

6. Verfahren nach einem der vorherigen Ansprüche, wobei nach Einleitung der Phasen (I, II, III) die vorab ermittelten Anfangspunkte (d1, d2, d3) aufgrund aktueller Messwerte aktualisiert und geändert werden, wenn die Änderungen das Mindest-Kriterium (K1), insbesondere Mindest-Zeitdauerkriterium (K1), erfüllen.

7. Verfahren nach Anspruch 6, wobei bei Ermittlung einer Änderung gegenüber der Projektion die Anfangspunkte (d1, d2, d3) nur nach hinten verlegt werden, vorzugsweise zeitlich oder räumlich nach hinten.

8. Verfahren nach einem der vorherigen Ansprüche, wobei die Anfangspunkte (d1, d2, d3) als Längsabstande (dx) oder Anfangszeitpunkte ermittelt werden und die Mindestdauer (Δt_0, m) als Mindest-Warnzeit (Δt_0) oder Längsabstand- Mindestwert (m) angesetzt wird.

9. Steuereinrichtung (6) für ein Fahrdynamiksystem (5) eines Eigenfahrzeugs (1), wobei die Steuereinrichtung (6) ausgebildet ist,
folgende Signale aufzunehmen:
ein Fahrgeschwindigkeits-Signal der Eigenfahrgeschwindigkeit (v1) des Eigenfahrzeugs (1),
ein Abstands-Messsignal (S1) mit einem Längsabstand (dx) zu einem Objekt (2) vor dem Eigenfahrzeug (1),
wobei die Steuereinrichtung (6) ausgebildet ist zur direkten oder indirekten Ausgabe von Bremssignalen (S2) an Radbremsen (8) zur Einleitung eines Bremsvorgangs des Eigenfahrzeugs (1) und zur Ausgabe eines Warnsignals (S3) an eine Warnanzeige (9) zur Warnung des Fahrers,
wobei die Steuereinrichtung (6) ausgelegt ist zur Ausführung eines Verfahrens nach einem der vorherigen Ansprüche.

10. Eigenfahrzeug (1), insbesondere Nutzfahrzeug, mit Radbremsen (8) zur Durchführung eines Bremsvorgangs ,
einem Fahrdynamiksystem (5) mit einer Steuereinrichtung (6) nach Anspruch 9,
einem Abstandssensor (4) zur Ermittlung eines Längsabstandes (dx) zu einem vorderen Objekt (2) und Ausgabe von Abstands-Messsignalen (S1) an die Steuereinrichtung (6),
wobei die Steuereinrichtung (6) ausgebildet ist zur direkten oder indirekten Ausgabe von Bremssignalen (S2) an die Radbremsen (8) zur Einleitung einer autonomen Teilbrems-Phase (II) und einer autonomen Notbrems-Phase (III) des Eigenfahrzeugs (1) und zur Ausgabe eines Warnsignals (S3) an eine Warnanzeige (9) zur Warnung des Fahrers.

## Claims

1. A method for autonomous emergency braking of an ego vehicle (1) comprising at least the following steps:
capturing driving-dynamics variables (v1, a1) of the ego vehicle (1),
capturing distance measurement signals (S1) and determining a longitudinal distance (dx) of the ego vehicle (1) from an object (2) in front (St1),
if an emergency braking situation (St2, y) is detected based on the driving-dynamics variables (v1, a1) and the distance measurement signals (S1); advanced determining or projecting
- of a first starting point (d1) for initiation of a warning phase (I) with an output of a warning signal (S3) without initiation of a braking operation, and
- of a second starting point (d2) for initiation of a subsequent partial braking phase (II) with a partial-braking brake pressure (p_hc), and
- of a third starting point (d3) for initiation of a subsequent emergency braking phase (III) with a higher brake pressure (p_aeb),
wherein during the advanced determination of the first, second, and/or third starting point (d1, d2, d3) the following determination steps are carried out:
= setting up a minimum period criterion (K1) with at least one minimum period (Δt_0, m) of the warning phase (I) and/or the sum of the warning phase (I) and partial braking phase (II), which is not undershot,
= projecting, in advance in accordance with the longitudinal distance (dx) to the object (2), a criticality function (KL) that represents a criticality of the traffic situation,
= wherein K thresholds (SW1, SW2, SW3) for the initiation of the warning phase (I), the partial braking phase (II) and the emergency braking phase (III) are stipulated for the projected criticality function (KL) such that, when the minimum period (Δt_0, m) is reached, the criticality function (KL) has already exceeded a third K threshold (SW3) for the initiation of the emergency braking phase (III).

2. The method according to claim 1, wherein
the criticality (K) of the traffic situation provides a probability of a collision with an object (2), while taking into account longitudinal dynamics as an equation of motion over time.

3. The method according to claim 2,
wherein during determination, a dynamic criterion (K2) is used with a longitudinal dynamics criterium (K2-I), preferably also a transversal dynamics criterion (K2-q), e.g., as an avoidance criterion for determination of a probability of an avoidance maneuver.

4. The method according to any of the preceding claims, wherein
during projection starting from the partial braking phase (II) for taking into account relatively high tolerances, a relatively wide value range (KL-a, KL-b) of the criticality curve (KL) is set up with a lower line (KL-b) and an upper line (KL-a),
wherein in the projected profile the upper line (KL-a) and the lower line (KL-b) have exceeded the third K threshold (SW3) when the minimum period (Δt_0, m) has been reached.

5. The method according to any of the preceding claims, wherein the following K thresholds (SW1, SW2, SW3) are specified:
- a first K threshold (SW1) for the initiation of the warning phase (I)
- a second K threshold (SW2) for the initiation of the partial braking phase (II)
- the third K threshold (SW3) for the initiation of the emergency braking phase (III).

6. The method according to any of the preceding claims, wherein
after the initiation of the phases (I, II, III), previously determined starting points (d1, d2, d3) are updated based on current measured values and changed if the changes satisfy the minimum criterion (K1), in particular the minimum period criterion (K1).

7. The method according to claim 6, wherein
when a change in comparison with a projection is determined, the starting points (d1, d2, d3) are only shifted rearward, preferably temporally or spatially rearward.

8. The method according to any of the preceding claims, wherein
the starting points (d1, d2, d3) are determined as longitudinal distances (dx) or starting times, and the minimum period (Δt_0, m) is set as a minimum warning time (Δt_0) or a longitudinal distance minimum value (m).

9. A control device (6) for a driving-dynamics system (5) of an ego vehicle (1), wherein the control device (6) is configured to receive the following signals:
a vehicle speed signal of the ego vehicle speed (v1) of the ego vehicle (1),
a distance measurement signal (S1) with a longitudinal distance (dx) to an object (2) in front of the ego vehicle (1),
wherein the control device (6) is configured to directly or indirectly output brake signals (S2) to wheel brakes (8) for initiation of a braking process of the ego vehicle (1) and for output of a warning signal (S3) to a warning display (9) for warning the driver,
wherein the control device (6) is designed to carry out a method according to any of the preceding claims.

10. An ego vehicle (1), in particular a commercial vehicle, comprising:
wheel brakes (8) for carrying out a braking process,
a driving-dynamics system (5) with a control device (6) according to claim 9,
a distance sensor (4) for determining a longitudinal distance (dx) to the front object (2) and for outputting distance measurement signals (S1) to the control device (6),
wherein the control device (6) is configured to directly or indirectly output brake signals (S2) to wheel brakes (8) for initiation of an autonomous partial braking phase (II) and an autonomous emergency braking phase (III) of the ego vehicle (1) and for output of a warning signal (S3) to a warning display (9) for warning the driver.

## Revendications

1. Procédé pour le freinage d'urgence autonome d'un véhicule propre (1), avec au moins les étapes suivantes :
la réception de grandeurs de dynamique de conduite (v1, a1) du véhicule propre (1),
la réception de signaux de mesure de distance (S1) et la détermination d'une distance longitudinale (dx) du véhicule propre (1) à partir d'un objet avant (2) (St1),
lorsque, sur la base des grandeurs de dynamique de conduite (v1, a1) et des signaux de mesure de distance (S1), une situation de freinage d'urgence est décelée, (St2, y) au préalable la détermination ou projection
- d'un premier point initial (d1) pour le déclenchement d'une phase d'avertissement (I) par délivrance d'un signal d'avertissement (S3) sans déclenchement d'un freinage, et
- d'un deuxième point initial (d2) pour le déclenchement d'une phase de freinage partiel (II) subséquente avec une pression de freinage de freinage partiel plus faible (p_hc) et
- d'un troisième point initial (d3) pour le déclenchement d'une phase de freinage d'urgence (III) subséquente avec une pression de freinage plus élevée (p_aeb),
dans lequel, lors de la détermination du premier, deuxième et/ou troisième point initial (d1, d2, d3), les étapes de détermination suivantes sont réalisées :
= un critère de durée minimale (K1) avec au moins une durée minimale (Δt_0, m) de la phase d'avertissement (I) et/ou de la somme de la phase d'avertissement (I) et de la phase de freinage partiel (II) est fixé, en deçà duquel il ne faut pas passer,
= une fonction de criticité (KL), qui représente la criticité de la situation de circulation, est projetée au préalable en fonction de la distance longitudinale (dx) par rapport à l'objet (2),
= dans lequel, pour la fonction de criticité (KL) projetée, des seuils K (SW1, SW2, SW3) pour le déclenchement de la phase d'avertissement (I), de la phase de freinage partiel (II) et de la phase de freinage d'urgence (III) sont établis de telle sorte que, lorsque la durée minimale (Δt_0, m) est atteinte, la fonction de criticité (KL) a déjà dépassé un troisième seuil K (SW3) pour le déclenchement de la phase de freinage d'urgence (III).

2. Procédé selon la revendication 1, dans lequel
la criticité (K) présente la probabilité d'une collision avec l'objet (2), avec prise en compte de la dynamique longitudinale comme équation de mouvement du temps.

3. Procédé selon la revendication 2, dans lequel
lors de la détermination, un critère dynamique (K2) avec un critère de dynamique longitudinale (K2-I), de préférence également un critère de dynamique transversale (K2-q), par exemple comme critère d'évitement, est utilisé pour la détermination d'une probabilité d'un processus d'évitement.

4. Procédé selon l'une quelconque des revendications précédentes, dans lequel
lors de la projection, à partir de la phase de freinage partiel (II), pour la prise en compte de tolérances plus élevées, une plage de valeurs (KL-a, KL-b) plus large de la courbe de criticité (KL) avec une ligne inférieure (KL-b) et une ligne supérieure (KL-a) est fixée,
dans lequel, dans le tracé projeté, la ligne supérieure (KL-a) et la ligne inférieure (KL-b) ont dépassé le troisième seuil K (SW3) lorsque la durée minimale (Δt_0, m) est atteinte.

5. Procédé selon l'une quelconque des revendications précédentes, dans lequel
les seuils K (SW1, SW2, SW3) suivants sont fixés :
- un premier seuil K (SW1) pour le déclenchement de la phase d'avertissement (I)
- un deuxième seuil K (SW2) pour le déclenchement de la phase de freinage partiel (II)
- le troisième seuil K (SW3) pour le déclenchement de la phase de freinage d'urgence (III).

6. Procédé selon l'une quelconque des revendications précédentes, dans lequel
après le déclenchement des phases (I, II, III), les points initiaux (d1, d2, d3) déterminés au préalable sont actualisés et modifiés sur la base de valeurs de mesure actuelles lorsque les modifications satisfont au critère minimal (K1), en particulier critère de durée minimale (K1).

7. Procédé selon la revendication 6, dans lequel
lors de la détermination d'une modification par rapport à la projection, les points initiaux (d1, d2, d3) sont déplacés uniquement vers l'arrière, de préférence dans le temps ou dans l'espace vers l'arrière.

8. Procédé selon l'une quelconque des revendications précédentes, dans lequel
les points initiaux (d1, d2, d3) sont déterminés en tant que distances longitudinales (dx) ou instants initiaux et la durée minimale (Δt_0, m) est fixée en tant que temps d'avertissement minimal (Δt_0) ou valeur minimale de distance longitudinale (m).

9. Dispositif de commande (6) pour un système de dynamique de conduite (5) d'un véhicule propre (1), dans lequel le dispositif de commande (6) est réalisé pour recevoir les signaux suivants :
un signal de vitesse de marche de la vitesse de véhicule propre (v1) du véhicule propre (1),
un signal de mesure de distance (S1) avec une distance longitudinale (dx) par rapport à un objet (2) devant le véhicule propre (1),
dans lequel le dispositif de commande (6) est réalisé pour l'émission directe ou indirecte de signaux de freinage (S2) sur des freins de roue (8) pour le déclenchement d'un processus de freinage du véhicule propre (1) et pour la délivrance d'un signal d'avertissement (S3) à un indicateur d'avertissement (9) pour avertir le conducteur,
dans lequel le dispositif de commande (6) est conçu pour exécuter un procédé selon l'une quelconque des revendications précédentes.

10. Véhicule propre (1), en particulier véhicule utilitaire, avec
des freins de roue (8) pour réaliser un processus de freinage,
un système de dynamique de conduite (5) avec un dispositif de commande (6) selon la revendication 9,
un capteur de distance (4) pour la détermination d'une distance longitudinale (dx) par rapport à un objet avant (2) et la délivrance de signaux de mesure de distance (S1) au dispositif de commande (6),
dans lequel le dispositif de commande (6) est réalisé pour la délivrance directe ou indirecte de signaux de freinage (S2) aux freins de roue (8) pour le déclenchement d'une phase de freinage partiel (II) autonome et d'une phase de freinage d'urgence (III) autonome du véhicule propre (1) et pour la délivrance d'un signal d'avertissement (S3) à un indicateur d'avertissement (9) pour avertir le conducteur.
